(19) **Europäisches Patentamt**

**European Patent Office**

**Office européen des brevets**

(11) **EP 1 241 377 B1**

(12) **EUROPÄISCHE PATENTSCHRIFT**

(45) Veröffentlichungstag und Bekanntmachung des Hinweises auf die Patenterteilung:
**17.11.2004   Patentblatt 2004/47**

(51) Int Cl.⁷: **F16F 15/00**, F16F 3/00

(21) Anmeldenummer: **02002597.9**

(22) Anmeldetag: **05.02.2002**

(54) **Verfahren zur Abstimmung eines Maschinenlagers**

Method for tuning a machine support

Procédé pour optimiser le support d'une machine

(84) Benannte Vertragsstaaten:
**DE ES FR GB IT**

(30) Priorität: **15.03.2001   DE 10112477**

(43) Veröffentlichungstag der Anmeldung:
**18.09.2002   Patentblatt 2002/38**

(73) Patentinhaber: **MAN NUTZFAHRZEUGE AG**
**80995 München (DE)**

(72) Erfinder: **Burkhardt, Wolfgang, Dipl.-Ing. (FH)**
**91522 Ansbach (DE)**

(56) Entgegenhaltungen:
**EP-A- 0 794 100         DE-A- 4 101 864**
**DE-C- 692 713            FR-E- 61 342**
**US-A- 2 770 434         US-A- 4 958 812**
**US-A- 5 039 071         US-A- 5 505 521**
**US-B1- 6 193 032**

**Beschreibung**

Die Erfindung bezieht sich auf ein Verfahren gemäß dem Gattungsbegriff des Patentanspruches 1.

Die Aufstellung und somit die Verbindung von Maschinen mit dem Maschinenfundament erfolgt üblicherweise mittels einzelnen oder mehreren elastischer Maschinenlager. Dies gilt insbesondere für Maschinen mit oszillierenden Massen, wie Hubkolbenmotoren.

Die Auslegung dieser Maschinenlager hinsichtlich der Federsteifigkeit und Dämpfung erfolgt im ersten Schritt durch eine rechnerische Bestimmung hinsichtlich Gewicht, Trägheitsmomenten und dominanter Erregerfrequenzen.

Ist jedoch diese Maschine mit anderen Komponenten wie Getriebe, Generator verbunden ist eine rein theoretische Auslegung der Maschinenlager zur Erreichung eines hinreichend ruhigen Laufes nicht ausreichend. Zudem machen nicht erfassbare Randbedingungen wie äußere Kräfte (Propellerschub bei Schiffsantrieben ) eine ausreichend genaue Definition der Maschinenlager nur bedingt möglich.

So ist bei erstmaliger Fertigung einer bis dato unbekannten Maschinenkonfiguration die Überprüfung der ausgewählten Maschinenlager während des Betriebs erforderlich. Oft ist eine Anpassung der Maschinenlager, durch Austausch mit Maschinenlager anderer Steifigkeit, vor Ort, erforderlich. Dies ist mit erheblichen Umbauaufwand verbunden, daß für die bekannten Ausführungen der Maschinenlager, durch Austausch mit Maschinenlager anderer Steifigkeit, vor Ort, erforderlich. Dies ist mit erheblichen Umbauaufwand verbunden, da für die bekannten Ausführungen der Maschinenlager der Motor hierzu angehoben und anschließend erneut ausgerichtet werden muß. Beispielsweise ist dies bei Antrieben von Schiffsmotoren mit den dort vorliegenden beengten Einbaubedingungen ein äußerst langwieriges Unterfangen.

In Verbindung mit Maschinenlagern sind verschiedene Anordnungen bekannt geworden. So beschreibt die US-A-4958812 eine Federanordnung, bestehend aus zwei parallel wirksamen Federn unterschiedlicher Federcharakteristik, wobei je nach Federweg die eine oder die andere Federcharakteristik überwiegt. Nachteilig bei einer solchen Anordnung ist, dass die Eigenschaften der Federanordnung nicht veränderbar sind.

Weiterhin ist es aus der EP-A-0 794 100 bekannt, bei einem Schienenfahrzeug je nach Beladungszustand eine in einer Federungsanordnung vorgesehene Zusatzfeder, von einer Regulierungseinrichtung gesteuert, mehr oder weniger stark an der Kraftübertragung zu beteiligen, um im Wege dieser Niveauregulierung die Federungscharakteristik möglichst konstant zu halten.

Aus der DE-A 4101864 ist schließlich eine Gewichtsausgleichsanordnung zur Schwingungsisolation selbst- oder fremderregter Massen bekannt, die Schwingungen auf beliebigen Bahnen im Raum statisch ausgleicht.

Der wesentliche Nachteil bekannter Anordnungen besteht, wie bereits dargestellt, darin, dass die Federungseigenschaften während des Betriebes bzw. im eingebauten Zustand der Federanordnung nicht modifizierbar bzw. optimierbar sind.

Aufgabe der Erfindung ist es, den Aufwand für das Umbauen weitgehend zu vermeiden, sowie die Möglichkeit einer Modifikation im Betrieb zu ermöglichen. Zudem sollte schon eine weitgehende Optimierung ohne aufwendige Messapparatur und entsprechendes Fachpersonal möglich sein.

Gelöst wird diese Aufgabe durch die kennzeichnenden Merkmale des Patentanspruches 1.

Dadurch, daß das Grundlager nur für die Aufnahme der Gewichtskräfte ausgelegt ist, ist man in der Wahl der Federsteifigkeit des Zusatzmoduls so frei, daß gewünschte Eigenschaften bezüglich Dämpfung und Eigenfrequenz erreicht werden.

Eine Weiterbildung kann Anspruch 2 entnommen werden.

Das Zusatzmodul kann in seinen Federungseigenschaften nicht nur einer Richtung, beispielsweise der Vertikalen, angepaßt werden, sondern auch in den beiden orthogonal dazu stehenden Richtungen. Das erfindungsgemäße Verfahren wird an Hand von Zeichnungen erläutert.

Es zeigt:

Fig. 1 ein Maschinenlager mit einem Grundlager

Fig. 2 ein Maschinenlager mit Grundlager und dazu parallel geschaltetem Zusatzmodul

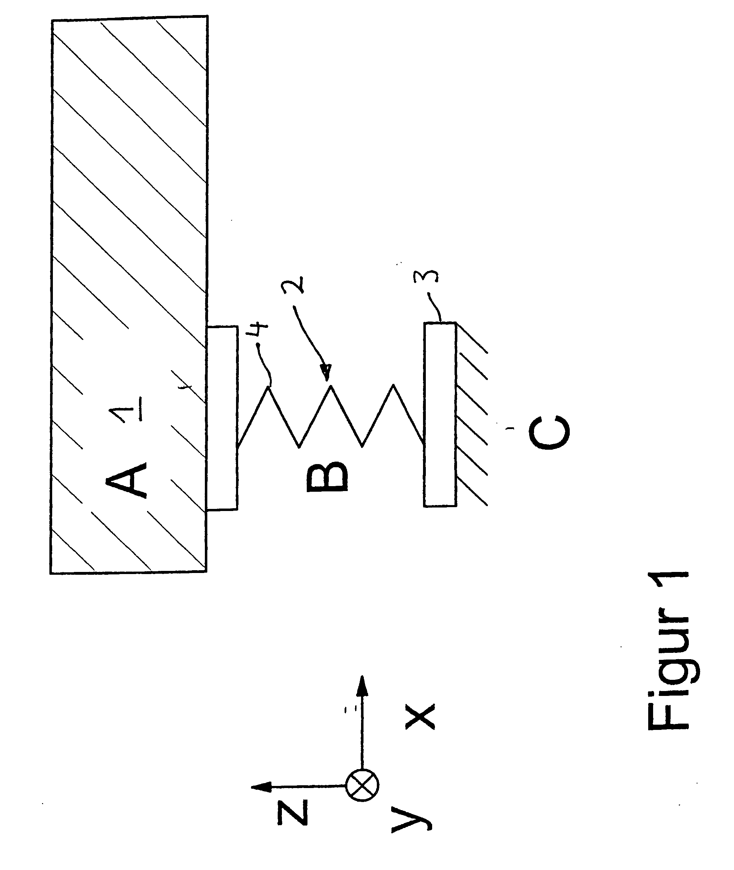

Figur 1 zeigt eine Maschine 1, welche über ein Maschinenlager auf einem Maschinenfundament 3 abgestützt ist. Das Maschinelager - hier in der Funktion eines Grundlagers 2 wird aus einer Feder 4 gebildet, deren Steifigkeit $C_{1Z}$ beträgt.

Das Koordinatensystem ist durch die orthogonalen Koordinaten x, y, z festgelegt. Die Z-Koordinate sei die vertikale Richtung, in der die Gewichtskraft der Maschine 1 wirkt.

Die Steifigkeit $C_{1Z}$ der Feder 4 wird der Gewichtskraft angepaßt und relativ weich ausgeführt.

Bei Maschinen 1 mit oszillierenden Massen, beispielsweise bei Brennkraftmaschinen, ist es jedoch zur Vermeidung von Resonanzen erforderlich die Steifigkeit der Feder 4 dem Schwingungsverhalten im Betrieb anzupassen. Als Erregerkräfte treten oszillierende Massenkräfte in Erscheinung. Rein rotierende Massen lassen sich durch Gegenmassen ausgleichen.

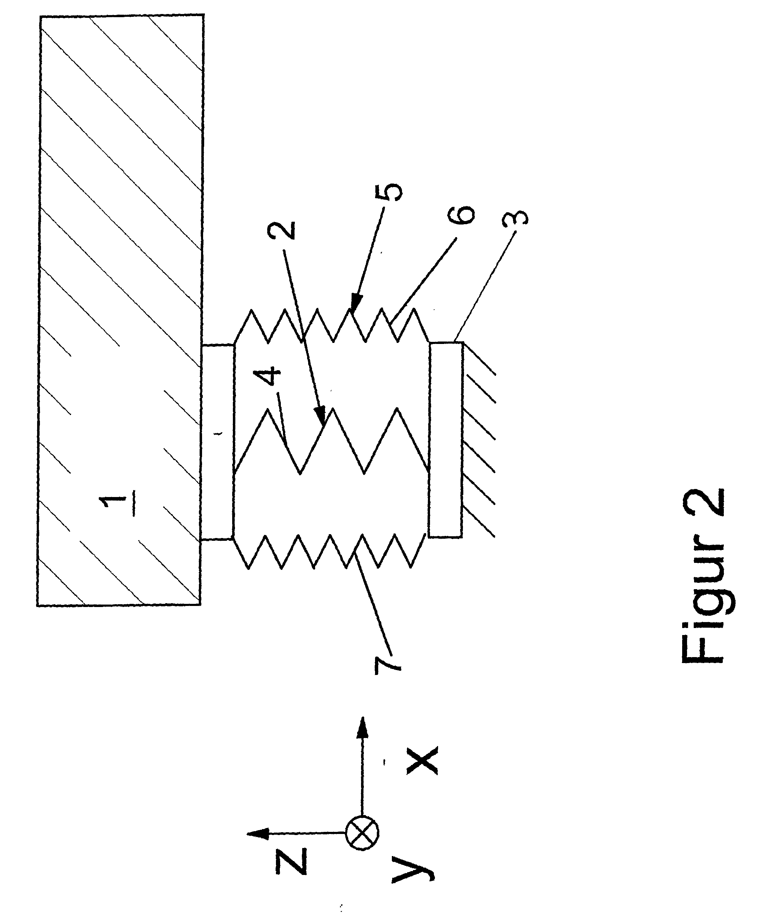

Nach Figur 2 wird der Feder 4 des Grundlagers 2 erfindungsgemäß mindestens ein Zusatzmodul 5 in Form einer zweiten Feder 6 parallel geschaltet. Diese zweite Feder 6 ist beim Einbau von jeder Gewichtskraft der Maschine 1 entlastet, d. h., daß die zweite Feder 6 erst nach der Einfederung der Feder 4 in den zwischen Maschine 1 und Maschinenfundament 3 verbleibenden Zwischenraum eingebaut wird.

Die Steifigkeit $C_{2Z}$ der zweiten Feder 6 kann ohne Rücksicht auf die Belastung durch Gewichtskräfte allein nach Gesichtspunkten der gewünschten Eigenfrequenz des aus der Masse m der Maschine 1 und den Steifigkeiten $C_{1Z} + C_{2Z}$ gebildeten Schwingungssystems ausgelegt werden. Die Eigenfrequenz läßt sich durch Wahl der Steifigkeit $C_{2Z}$ so variieren, daß gefährliche Resonanzen vermieden werden.

Es versteht sich, daß das Zusatzmodul 5 auch aus mehreren Federn, beispielsweise einer dritten Feder 7 mit einer Steifigkeit $C_{3Z}$ gebildet werden kann, die dem Grundlager 2 parallel geschaltet ist.

Durch Anwendung des erfindungsgemäßen Zusatzmoduls 5 lassen sich auch die Steifigkeiten in den Richtungen x und y beeinflussen.

Die Steifigkeiten des aus Grundlager 2 und dem Zusatzmodul 5 gebildeten Systems ergeben sich wie folgt:

$$C_x = C_{1x} + C_{2x} + C_{3x}$$

$$C_y = C_{1y} + C_{2y} + C_{3y}$$

$$C_Z = C_{1Z} + C_{2Z} + C_{3Z}$$

es bedeutet:

$C_1$ Steifigkeit der Feder 4 (Grundlager 2)
$C_2$ Steifigkeit der Feder 6
$C_3$ Steifigkeit der Feder 7

Die Indizes x, y, z geben die Richtung der Steifigkeit an.

Das erfindungsgemäße Verfahren ermöglicht mit geringstem Montageaufwand die Anpassung der Maschinenlager einer bereits eingebauten Maschine, ohne daß die Maschine wieder ausgebaut werden muß. Dies ist besonders vorteilhaft bei Brennkraftmaschinen die einem Bootsantrieb dienen. Da dort sehr beengte Einbauverhältnisse vorliegen, ist das erfindungsgemäße Verfahren montagefreundlich, zumal keine neue Justierung der Anlage vorgenommen werden muß.

## Patentansprüche

1. Verfahren zur Abstimmung eines Maschinenlagers, bei dem die Gewichtskraft der Maschine (1) ausschließlich von einem Grundlager (2) aufgenommen wird, **dadurch gekennzeichnet, dass** zur differenzierten Abstimmung des Maschinenlagers auf Zusatzkräfte, wie z.B. oszillierende Massenkräfte, dem Grundlager (2) mindestens ein von der Gewichtskraft entlastetes Zusatzmodul (5) parallel geschaltet ist, derart, dass das Zusatzmodul (5) erst nach der Einfederung des Grundlagers (2) in den zwischen Maschine (1) und Maschinenfundament (3) verbliebenen Zwischenraum eingebaut wird, so dass durch die Federsteifigkeit des Zusatzmoduls (5) das aus Grundlager (2) und Zusatzmodul (5) kombinierte Federsystem vorgegebenen Eigenschaften bezüglich Dämpfung und Eigenfrequenz entspricht.

2. Verfahren nach Anspruch 1, **dadurch gekennzeichnet, dass** durch die Federsteifigkeit des Zusatzmoduls (5) richtungsabhängige Eigenschaften bezüglich Dämpfung und Eigenfrequenz darstellbar sind.

## Claims

1. A method of tuning a machine bearing, in which the force of the weight of the machine (1) is taken up exclusively by a main bearing (2), **characterized in that**, in order to tune the machine bearing in a differentiated manner to additional forces, such as for example oscillating forces of inertia, at least one additional module (5) relieved of the force of the weight is arranged in parallel with the main bearing (2), in such a way that only after the spring deflexion of the main bearing (2) is the additional module (5) fitted into the interspace remaining between the machine (1) and the machine base (3), so that as a result of the spring rigidity of the additional module (5) the springing system resulting from the combination of the main bearing (2) and the additional module (5) corresponds to pre-set properties with respect to damping and natural frequency.

2. A method according to Claim 1, **characterized in that** direction-dependent properties with respect to damping and natural frequency are capable of being provided by the spring rigidity of the additional module (5).

## Revendications

1. Procédé pour déterminer un palier de machine dans lequel le poids de la machine (1) est reçu exclusivement par un palier de base (2), **caractérisé en ce que** pour déterminer de manière différentiée le palier de la machine suivant les forces supplémentaires comme par exemple des masses oscillantes, on branche en parallèle au module de base (2) au moins un module complémentaire (5) déchargé du poids, de façon que le module complémentaire (5) ne soit monté dans l'intervalle subsistant entre la machine (1) et les fondations de la machine (3) seulement après la compression du palier de base (2) de sorte que grâce à la rigidité des ressorts du module complémentaire (5), le système de ressorts combinés formé du palier de base (2) et du module complémentaire (5) corresponde à des propriétés prédéterminées concernant l'amortissement et la fréquence propre.

2. Procédé selon la revendication 1,
   **caractérisé en ce que**
   par la rigidité de ressort du module complémentaire (5) on peut présenter des propriétés indépendantes de la direction concernant l'amortissement et la fréquence propre.

EP 1 241 377 B1

A  $\underline{1}$

z

B

2

y    x

3

C

Figur 1

Figur 2

EP 1 241 377 B1